# EUROPEAN PATENT APPLICATION

(11) **EP 4 647 615 A1**
(43) Date of publication of application: **12.11.2025**
(21) Application number: 24174809.4
(22) Date of filing: 08.05.2024
(51) Int. Cl.: F16B 21/16

(54) **TOLERANCE COMPENSATOR AND INSTALLATION SYSTEM**

(71) Applicant: AIRBUS Operations GmbH, 21129 Hamburg (DE)
(72) Inventor: Eschen, Henrik, 21129 Hamburg (DE); Boyksen, Jan, 21129 Hamburg (DE)

(57) **Abstract**

The invention proposes a tolerance compensator (30) comprising an outer tubular body (31) having a tip (48) at a first end, wherein the tip (48) is insertable in an opening (33), wherein the outer tubular body (31) retains an interface (110) of a fastening structure (106) that is to be connected, an inner tubular body (38) comprising an inner pin (39) at a first end, wherein the inner tubular body (38) and the inner pin (39) are movable along a longitudinal axis within the outer tubular body (31), an end member (42) that abuts a second end of the inner tubular body (38) that opposes the first end and that has a radial flange (43) that abuts the outer tubular body (31), an inner spring (45) located on the inner pin (39) within the inner tubular body (38), and an outer spring (44) retained on the outer tubular body (31).

## Description

The invention relates to a tolerance compensator and installation system, which may be used to install a fastening structure, e.g. a crown module, on the interior of a vehicle such as an aircraft.

In addition to the passenger seats, aircraft cabins of passenger aircraft also comprise interior fixtures that are provided for use by the crew or by the passengers of the aircraft. Such interior fixtures include, for example, toilets, galleys, bar fixtures, supports for entertainment systems etc, and are referred to as monuments. Another type of interior fixture is an overhead storage bin, for example for storing luggage. Due to the restricted space available in aircraft cabins, such fixtures are often produced as preassembled or partially preassembled modules that are fastened to the interior of the aircraft, for example the aircraft frame, by an intermediate structure, e.g. a fastening structure.

In order to attach an intermediate fastening structure, which is to support a further object such as an overhead storage bin, to the aircraft frame in a reliable fashion, it is desirable to be able to compensate for any variation in the position of the aircraft frame and/or intermediate structure.

According to the present application, a tolerance compensator for installing a fastening structure on an attachment structure of a vehicle. The tolerance compensator comprises an outer tubular body comprising a longitudinal axis and a tip portion having a tip at a first end, wherein the tip is insertable in an opening of a fitting of the attachment structure, wherein the outer tubular body retains an interface of the fastening structure that is to be connected to the attachment frame, an inner tubular body comprising an inner pin at a first end, wherein the inner tubular body and the inner pin are movable along the longitudinal axis within the outer tubular body and tip portion, respectively, an end member that abuts a second end of the inner tubular body that opposes the first end and that has a radial flange that abuts the outer tubular body, an inner spring located on the inner pin within the inner tubular body, wherein the inner spring is retained between the end member and the first end of the inner tubular body, and an outer spring retained on the outer tubular body and between the radial flange of the end member and a stop located on an outer surface of the outer tubular body.

The tolerance compensator system may be used for installing a fastening system on an attachment structure, e.g. a frame of the fuselage of an aircraft. The fastening system may comprise one or more overhead storage bins and further components such as electrical systems air conditioning, oxygen supply. The individual positioning and assembly of each system individually within the aircraft is complex and time consuming. Therefore, some or all of these parts are preassembled as a module which is then attached to the attachment structure of the aircraft by a fastening structure. This reduces the number of interfaces which have to be connected and fastened. Any variations in position from the ideal position may have to be compensated, for example if they are greater than a pre-determined tolerance. a

A pre-assembled fastening structure may include a plurality of interfaces which have to be fastened to the attachment structure of the vehicle, e.g. aircraft. Thus, tolerance compensation for this plurality of interfaces is desirable and can be provided by the use of a plurality of the tolerance compensators according to any one of the embodiments described herein.

The elongate body, together with the first and second struts may form a triangular shape. The elongate body may have the form of a tube which may have a circular cross-section.

In an embodiment, the first strut and/or the second strut are variably positionable with respect to the elongate body to provide tolerance compensation. The first strut and the second strut are lockable in an end position. The first strut is coupled between the elongate body at a first position and the second strut is coupled to the elongate body of the second position which is spaced apart from the first position. The first position may be a first end of the elongate body and the second position may be a second end of the elongate body that opposes the first end.

Preferably, the tip portion comprises a seat for retaining the interface of the fastening structure.

In an embodiment, the seat has a concave shape and the interface comprises a cup shape. For example, the seat and interface may comprise a ball and socket arrangement. Preferably, the interface comprises an opening through which the tip portion extends.

Preferably, the tolerance compensator further comprising a locking member that is moveably retained within the wall of the tip portion, wherein movement of the inner pin along the longitudinal axis urges the locking member radially outwards.

Preferably, the outer tubular body comprises a nose portion that forms a flange on the inner surface of the outer tubular body that acts as a stop for movement of the inner tubular body along the longitudinal axis.

Preferably, the tip portion comprises a second end that opposes the tip and the second end is engaged with the inner surface of the nose portion of the outer tubular body.

In an embodiment, the inner pin comprises a first portion that is retained in the inner tubular body and a second head portion that is located in the tip portion. Preferably, the inner pin is retained in an opening at the first end of the inner tubular body.

Preferably, the preload of inner spring is greater than a predetermined locking force. This enables the inner spring to be further compressed after the interface retained by the tolerance compensator is installed on the attachment structure and enables further interfaces of the fastening structure which have not yet been installed due to a larger tolerance to be installed during one installation process, e.g. one movement of a jig supporting the fastening structure.

In an embodiment, movement of the end member along the longitudinal axis within the outer tubular body urges the inner tubular body along the longitudinal axis and compresses the outer spring and inner spring.

According to the invention, an installation system for installing a fastening structure comprising a plurality of interfaces on an attachment structure of a vehicle, e.g. an aircraft, is also provided. The installation system comprises a jig for supporting the fastening structure and the tolerance compensator according to any one of the embodiments described herein, at least one interface of the fastening structure. The jig is moveable in a perpendicular direction to attachment structure in order to install the interface of the fastening structure on the attachment structure of the vehicle.

Preferably, each of the interfaces of the fastening structure has a tolerance compensator according to any one of the embodiments described herein, and tolerance compensation for the plurality of interfaces is provided in one linear movement of the jig.

Preferably, the interface of the fastening structure engages the seat of the outer tubular body and which comprises an opening adapted to receive the tip portion of the outer tubular body.

In an embodiment, the interface is connected to a rod which is adapted to receive a strut of the fastening structure.

In an embodiment, the seat comprises a concave surface and the interface of the fastening structure comprises a cup-shaped distal portion. This arrangement enables passive tolerance compensation.

In an embodiment, a first interface and a second interface are retained on the seat, wherein the seat comprises a concave shape, first interface comprises a cup shape and is adapted to fit the seat and the second interface comprises a cup shape that is adapted to fit the cup chape of the first interface. This enables the use of the tolerance compensator at a mode of the fastening structure.

In an embodiment, the installation system further comprising a guide system that is mounted on the jig, wherein the guide system comprises at least one guide plate, one guide plate allowing movement in two directions that are perpendicular to the longitudinal axis of the outer tubular body. The guide system is connected to the end member of the tolerance compensator. This enables tolerance compensation in three linear directions and three degrees of freedom for each interface.

In an embodiment, the guide plate is elongate and has a first end that is rotationally retained on the end member of the tolerance compensator and a second end that is rotationally retained on the jig to provide tolerance compensation in the two directions that are perpendicular to the longitudinal axis of the outer tubular body.

Preferably, the guide for the z direction and the guide for the y direction comprise a spring for determining the neutral position.

In an embodiment, the guide system attached to the jig to allow linear movement in a direction parallel to the longitudinal axis of the outer tubular body.

In an embodiment, the fastening structure comprises a plurality of sections, wherein each section comprises a first unit, a second unit and a connection unit positioned vertically between the first and second units. The first unit comprises an elongate body, a first strut and a second strut, wherein the first strut 16 is detachably coupled to the elongate body and to a first interface and the second strut is detachably coupled to the elongate body and to the first interface and extends at an inclined angle with respect to the elongate body. The second unit comprises an elongate body, a first strut and a second strut, wherein the first strut which is detachably coupled to the elongate body and to a second interface and the second strut is detachably coupled to the elongate body and the second interface and extends at an inclined angle with respect to the elongate body. The connection unit includes fifth and sixth struts and a third interface, wherein the fifth strut extends is detachably coupled to the elongate body of the first unit 11 and to the third interface and the sixth strut is detachably coupled between the elongate body of the second unit and the third interface.

In an embodiment, the first strut and/or the second strut are variably positionable with respect to the elongate body to provide tolerance compensation. The first strut and the second strut are lockable in an end position. The first strut is coupled between the elongate body at a first position and the second strut is coupled to the elongate body of the second position which is spaced apart from the first position. The first position may be a first end of the elongate body and the second position may be a second end of the elongate body that opposes the first end. The elongate body, together with the first and second struts may form a triangular shape. The elongate body may have the form of a tube which may have a circular cross-section. The elongate body and the first strut may be substantially coplanar. The second strut may be substantially coplanar with the elongate body and the first strut.

A vehicle is also provided which comprises a first attachment structure of an interior of the vehicle and the fastening structure of any one of the embodiments described herein. The fastening structure is fastened to the first attachment structure.

In an embodiment, the vehicle is an aircraft. In another embodiment, the vehicle is an aircraft and further comprises a second attachment structure. The first and second attachment structures may be fuselage frames that are spaced apart along the longitudinal direction of the aircraft and/or stringers that extend along the longitudinal direction of the aircraft.

The vehicle may be an aircraft, such as a passenger aircraft, or a rail vehicle or a road vehicle or a watercraft or a spacecraft. The attachment structure may comprise one or more fuselage frames which are spaced at intervals along the longitudinal direction of the aircraft. In the installed position, the fastening structure is positioned between the monument and the overhead storage bin compartment and the attachment structure.

Embodiments of the invention are described in more detail with reference to the accompanying schematic drawings that are listed below
Fig.1 depicts a schematic view of an aircraft;
Fig. 2A depicts a fastening structure supported on a jig;
Fig. 2B illustrates the fastening structure installed on an attachment structure of the aircraft;
Fig. 3, which includes Figs 3A to 3F, depicts views of a tolerance compensator for installing the fastening structure on the attachment structure of the aircraft;
Fig. 4, which includes Fig. 4A and 4B, depicts a guide for aligning the tolerance compensator with the fastening structure;
Fig. 5, which includes Figs 5A to 5C, depicts the removal of the jig from the installed fastening structure.

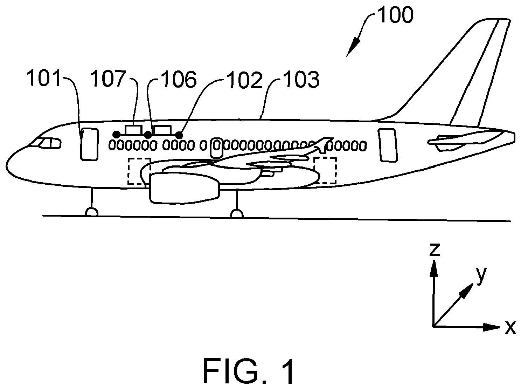

Fig. 1 depicts a schematic view of an aircraft 100 with an interior 101 which has an attachment structure 102 onto which one or more objects, e.g. modules 107 can be installed. Examples of a module 107 are a monument and an overhead storage bin, also known as an overhead luggage compartment, overhead locker or hat rack. A monument is a fixture that is provided for use by the crew or the passengers of the aircraft, such as toilets, galleys, bar fixtures etc, apart from overhead storage bins.

As illustrated with reference to Fig. 1, the longitudinal axis of the aircraft 100 is referred to as the x direction, the transverse axis as the y direction, which extends into the plane of the drawing, and the height as the z direction. Commonly, a plurality of modules 107, e.g. overhead storage bins, are arranged next one another in the vehicle 100, for example along the longitudinal axis of the vehicle, for example along the length of the fuselage 103 of the aircraft 100. A passenger aisle typically runs substantially parallel to the longitudinal axis and the row of modules.

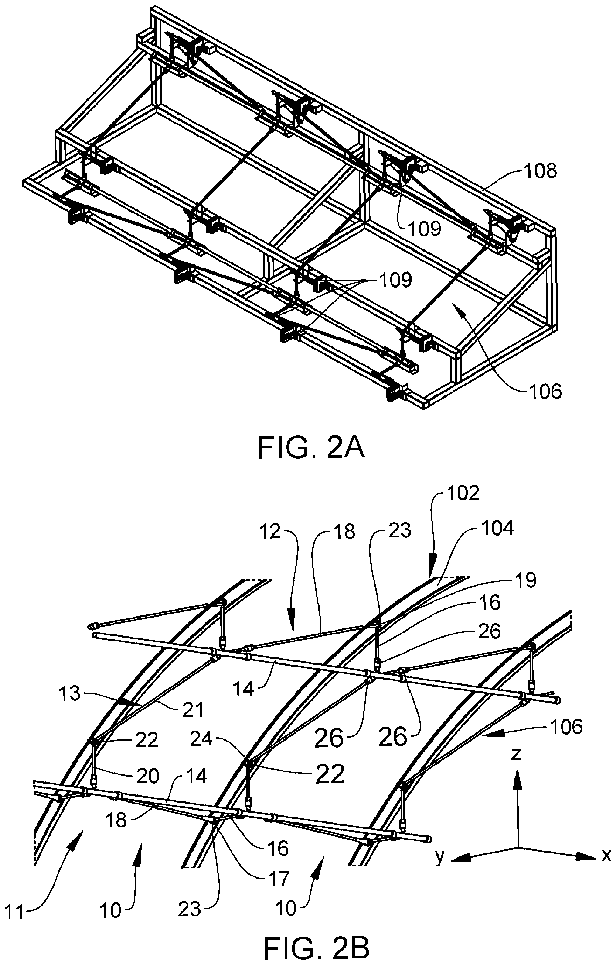

The modules 107 are fastened to the attachment structure 102 positioned at the interior 101 of the aircraft 100 by way of a fastening structure 106 which is depicted in figures 2A and 2B. In the description of the drawings, the fastening structure 106 will be described with reference to the aircraft 100. However, the fastening structure 106 can also be used to mount other types of components on the interior of other types of vehicles such as motor vehicles, including passenger motor vehicles, lorries and buses or other means of mass transportation such as trains or ships. The fastening structure 106 is not restricted to use with overhead luggage bins at any position above the floor but may also be used to install other types of interior components including monuments on the interior 101 of the aircraft 100. One fastening structure 106 may be used to fasten more than one module to the attachment structure 102 and includes a plurality of interfaces which are to be connected to the attachment structure 102.

Fig. 2A illustrates a schematic view of a portion of the fastening structure 106 which is supported on a jig 108 prior to its installation on the attachment structure 102 of the aircraft 100. Fig. 2B illustrates a portion of the fastening structure 106 after attachment to the attachment structure 102 of the aircraft. The attachment structure 102 is formed on the interior of the fuselage 103 and comprises plurality of fuselage frames 104 which are spaced apart at intervals along the longitudinal axis of the aircraft 100 and encircle the fuselage 103. The attachment structure 102 further comprises a plurality of stringers (not shown in Fig. 2B, that are positioned on the outer surface of the fuselage frames 104 and which extend in the longitudinal direction of the fuselage 103 between the fuselage frames 104.

The fastening structure 106 has a modular structure had comprises a plurality of sections 10 which can be suitably arranged to allow the desired arrangement of overhead storage bins and monuments on the fastening structure 106 and on the attachment structure 102 of the aircraft 100. The sections 10 of the fastening structure 106 are at least partially preassembled and supported on the jig 108 during installation on the attachment structure 102 of the aircraft 100. The parts of the sections may be further supported on the jog 108 by way of supports 109.

The sections 10 are arranged adjoining one another and connected to one another to form the fastening structure 106 along the longitudinal x direction of the aircraft. In the illustrated embodiment, each section 10 comprises a first unit 11, a second unit 12 and a connection unit 13 positioned vertically between the first and second units 11, 12. The second unit 12 is positioned above the first unit 11 in the z direction. In some embodiments, each section 10 has a single unit, e.g. the first unit 11.

The first unit 11 and the second unit 12 each comprise an elongate body 14 on which the module, for example an overhead storage bin, will be fastened. The elongate body 14 may have a tubular or pipe form and may include one or more component fixtures 15 onto which the module may be installed. The first unit 11 further includes a first strut 16 and a second strut 18. The first strut 16 is detachably coupled to the elongate body 14 and to a first fastening 17 and the second strut 18 is detachably coupled to the elongate body 14 and to the first fastening 17. The second strut 18 extends at an inclined angle with respect to the elongate body 14 from the elongate body 14 to the first fastening 17.

The second unit 12 also includes a first strut 16 which is detachably coupled to the elongate body 14 of the second unit 12 and to a second fastening 19 and a second strut 18 which is detachably coupled to the elongate body 14 and the second fastening 19. The second strut 19 extends at an inclined angle with respect to the elongate body 14 from the elongate body 14 to the second fastening 19. The struts 16, 18 and elongate body 14 of each unit 11, 12 form a triangular shape. The first and second struts 16, 18 may each be provided by a tube.

The connection unit 13 includes fifth and sixth struts 20, 21 and a third fastening 22. The fifth strut 20 extends is detachably coupled to the elongate body 14 of the first unit 11 and to the third fastening 22 and the sixth strut 21 is detachably coupled between the elongate body 14 of the second unit 12 and the third fastening 22 to connect the first and second units 11, 12 and form the section 10. The elongate body 14 and struts 16, 18, 20 ,21 of the sections 10 may be supported on the jig 108 by support brackets 109.

The elongate body 14, first strut 16 and second strut 18 of each of the first and second units 11, 12 form a triangular shape which may be adjustable, for example by means of a length compensator 26, shown in Figs 2A and 2B. The fastening structure 106 is supported on the jig 108 by way of the support brackets 109 and may be orientated with respect to the fuselage 103 by way of the jig 108. The jig 108 is orientated with respect to the fuselage 103 such that the elongate body 14 of each of the units 11, 12 extends in the longitudinal (x) direction of the fuselage 103.

In the mounted position illustrated in Fig. 2B, the first fastening 17 of the first unit 11 is engaged with a first fitting 24 in the fuselage frame 104, the second fastening 19 of the unit 12 is engaged with the second fitting 23 in the fuselage frame 104 and the third fastening 22 is engaged with a third fitting 25 on the same fuselage frame 104 to fasten the section 10 to the fuselage frame 104.

The fastenings 17, 19, 22 may be attached to its respective fitting by an elongate connector such as a bolt or screw and the corresponding fitting 23, 24, 25 may comprise an opening or bore, for example an opening in a bush or flange that is fixedly attached to the fuselage frame 104. Each of the fastenings 17, 19, 22 and its corresponding fitting 23, 24, 25 provides an interface 110 between the fastening structure 106 and the attachment structure 102.

In order to install the fastening structure 106 on the attachment structure 102, the jig 108 and/or installation system may include a mechanism for tolerance compensation. The fastening structure 106 may comprise at least one mechanism for tolerance compensation, for example in order to ensure that the elongate body 14, on which the module 107 is to be attached, is located at the desired position. In some embodiments, each of the interfaces 110 between the fastening structure 106 and the attachment structure 102 includes a mechanism for tolerance compensation.

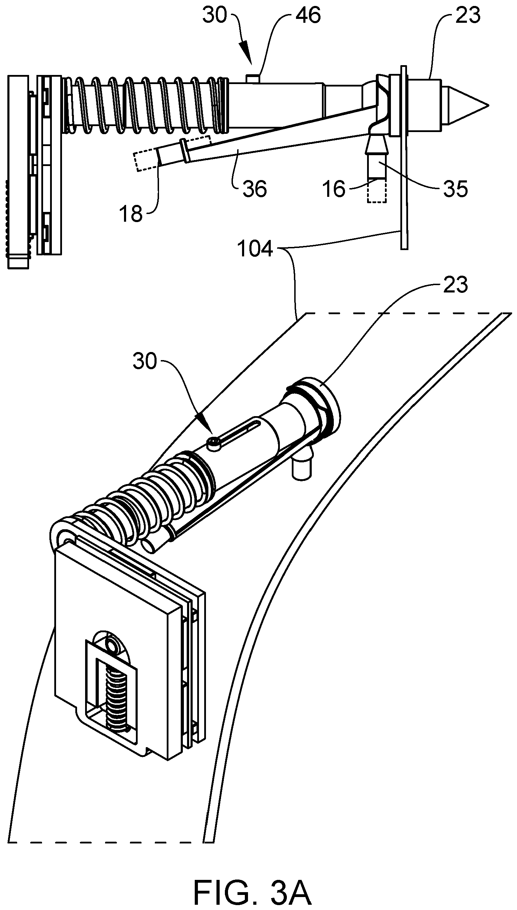

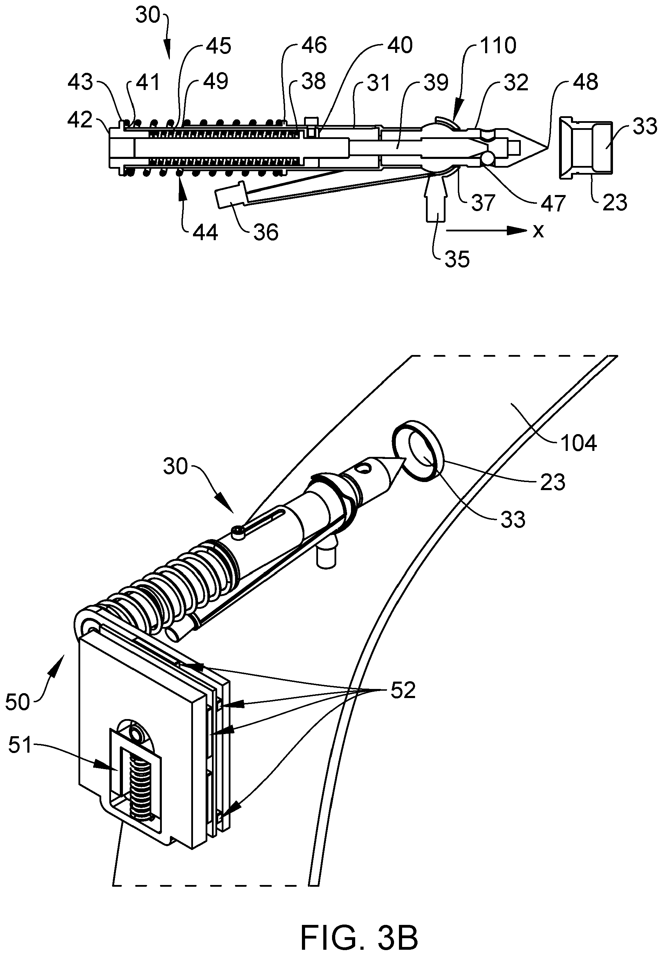

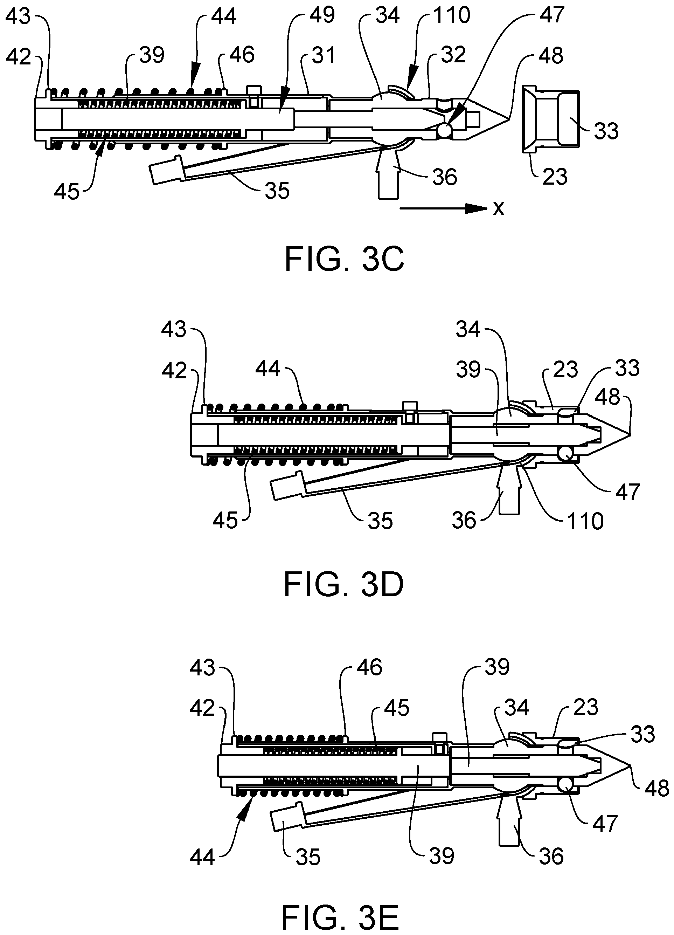

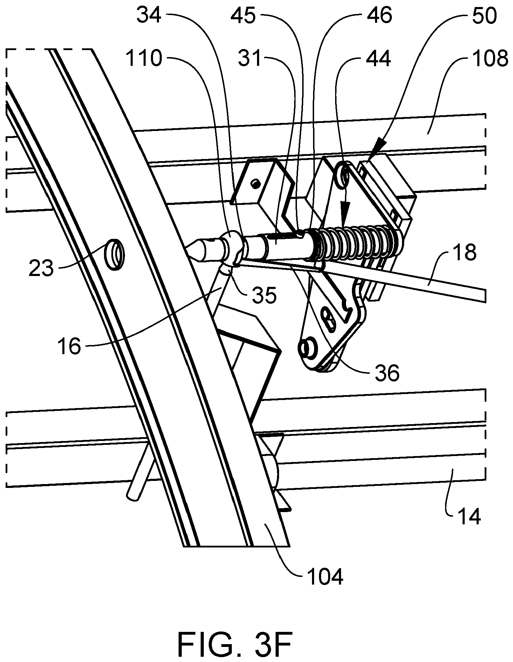

Figure 3, which includes figures 3A to 3F, illustrates use of a tolerance compensator 30 which may be used for installing each of the interfaces 110, for example the fastenings 17, 19 and 22, of the fastening structure 106, onto the attachment structure 102. Multiple interfaces 110 may be installed on the same structure, e.g. frame 104. Fig. 3A illustrates a side view and a perspective view of the tolerance compensator 30 installed on the frame 104 and Fig. 3B illustrates a cross-sectional view and a perspective view of the tolerance compensator 30.

The tolerance compensator 30 comprises an outer tubular body 31 having a longitudinal axis L and comprises a tip portion 32 attached to a first end of the outer tubular body 31. The outer tubular body 31 may be substantially cylindrical. The tip 48 of the tip portion 32 may be chamfered, e.g. conical, so as to provide a centring mechanism when the conical tip 32 is inserted into an elongate bore 33 of a bush providing the fixture 23 on the attachment structure 102 of the vehicle 100. The tip portion 32 of the tolerance compensator 30 also comprises a seat 34 for retaining the interface 110 of the fastening structure 106 which is to be connected to the fitting 23 of the attachment frame 102. The interface 110 may be one of the fastenings 17, 19, 22 for example. The seat 34 may be located adjacent the outer tubular member 31 and therefore intermediate the length of the tolerance compensator 30.

In the embodiment illustrated in figure 3, the seat 34 has a concave shape and may be substantially spherical. The interface 110 is formed on a distal end of each of two rods 35, 36. Each rod 35, 36 is to be connected to a structure, for example one of the first and second struts 14, 16 of one of the first and second units 11, 12 of one of the sections 10 of the fastening structure 106 as indicated schematically in Fig. 3A. The interface 110 has concave form which is adapted to engage with the concave seat 34 and comprises an opening 37 through which the tip portion 32 extends. These interfaces 110 are retained by the seat 34 by the tip portion 32 that extending through the opening 37. In the present embodiment, the interface 110 can be considered to have a ball and socket arrangement. Other shapes for the interface 110 and consequently the seat 34 may be used. The ball and socket arrangement has the advantage that the position of the rods 35, 36 is variable.

In some embodiments, two interfaces 110 are retained on a single seat 34. For example, the sub-shaped interface 110 for the rod 35 and for the rod 36 such that both the first and second struts 16, 18 can be installed on the fitting 23. In these embodiments, one interface, e.g. the interface 110 of the rod 36 is adapted to engage with the seat 34 and the other interface, e.g. the interface of the rod 35 is adapted to engaged with the interface 110 of the rod 35.

The tolerance compensator 30 further comprises an inner tubular body 38 which is slidably retained within the outer tubular body 3. The inner tubular body 38 has a first end 40 and a second end 41 opposing the first end 40. The tolerance compensator further 30 comprises an inner pin 39 which is located and retained at a first end 40 if the inner tubular body 38. The inner pin 39 ends from within the inner tubular body 38 into the tip portion 38 of the outer tubular body 31 and is slideably engages with an inner bore of the tip portion 32. The second end 41 of the inner tubular body 38 extends beyond the second end 49 of the outer tubular body 31, the second end 49 opposing the tip 48.

The tolerance compensator 30 comprises an end member 42, which is also tubular. The end member 42 engages the inside surface of the inner tubular body 38 and has a radial flange 43 which extends outwardly and abuts the second end 41 of the inner tubular body 38. An outer spring 44 is positioned on the outer tubular body 31 and is retained between the radial flange 43 and a stop 46 which radially protrudes from the outer surface of the outer tubular body 31. An inner spring 45 is retained around the inner pin 39 and between the end face of the end member 42 and the first end 40 of the inner tubular body 38.

A locking member 47 is positioned in the sidewall of the tip 32 of the outer tubular member 31. The locking member 47 is movable and engages with the inner pin 39 such that movement of the inner pin 39 along the longitudinal axis L towards the tip 48 causes the inner pin 39 to engage with the locking member 47, pushing the locking member 47 radially outwards so that the locking member 47 engages the fitting 23 thus enabling the tolerance compensator 30 to be locked in position with the fitting 23 of the attachment structure 102. In the installed and interlocked condition, shown in figure 3B, the interface 110 of each of the rods 35, 36 is in direct contact with the fitting 23 of the attachment structure 102 and the locking member 47 engages the fitting 23 thus enabling the tolerance compensator 30 to be locked in position with the fitting 23 of the attachment structure 102.

Figs 3C to 3E illustrate cross-sectional vies of the tolerance compensator 30 during the installation of one interface 110 of the plurality of interfaces of the fastening structure 106 that is supported on the jig 108. The fastening structure 106 is attachable to the attachment structure 102 of the aircraft 100 by the linear movement of the jig 108 in one single linear direction, namely the x direction. The tip portion 31 of the tolerance compensator 30 is inserted into the opening 33 in the aircraft frame 104 whilst the interface 110 of the fastening structure 106 is retained on the seat 34. The conical shape of the tip 48 provides a centring mechanism for inserting the tip portion 31 into the opening 33 such that, shown in figure 3D, the interface 110 engages with the fitting 22 on the attachment structure 102. In this position, the outer spring 44 and inner spring 45 are slightly compressed, the end member 43 has pushed the inner tubular body 39 and the inner pin along the longitudinal axis L in the x direction such that the inner pin engages the locking means, the locking means is urged outwardly so as to engage with a flange of the fitting.

Multiple interfaces of the fastening structure 106 are supported on the jig 108 and moved in the x direction simultaneously. The jig 108 is moved in the x direction until each of the interfaces 110 has engaged with the attachment structure 102. As shown in a comparison of Fig. 3E with Fig. 3D, further movement in the x direction of a tolerance compensator 30 that has already interlocked with the attachment structure 102, as shown in figure 3D, causes the end member 43 to move further towards the attachment structure 102 thus further compressing the outer spring 44 and the inner spring 45, as shown in Fig. 3E. This mechanism is repeated until of the interfaces 110 of the fastening structure 106 mounted on the jig 108are installed and locked in the attachment structure 102. Thus, the tolerances of multiple interfaces 110 have been compensated using a single jig movement in the x-direction by way of the tolerance compensator 30 provided for each of the interfaces 110 of the fastening structure 106.

The tolerance compensator 30 further includes guide plates 50 which are attached to the end member 42. These guide plates are attached to the jig 108 so as to allow movement of the jig 108 to translate into movement of the tolerance compensator 30. The plates may comprise position setters and springs, as shown in figures 3B and 4 and 5.

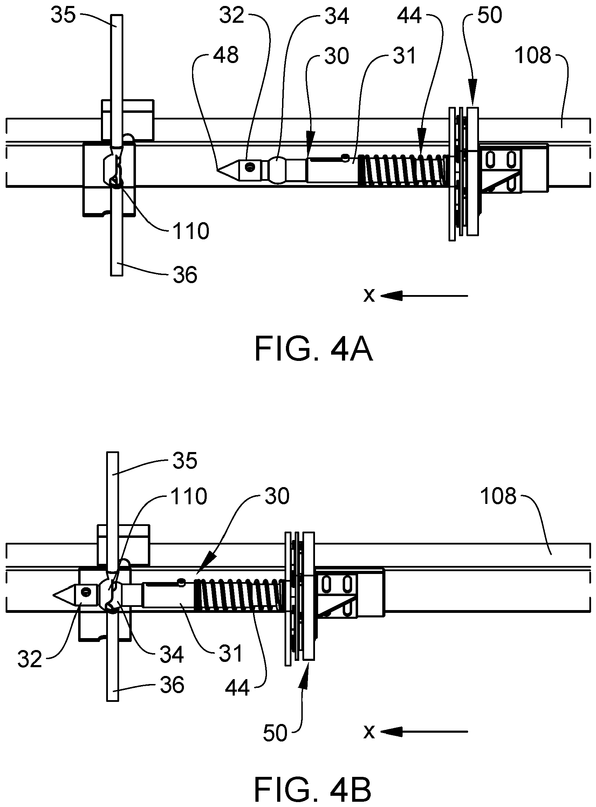

Fig. 4A and Fig. 4B illustrate side views of the tolerance connector 30 which is attached to the jig 108 and also illustrated the two rods 38, 36, which are connected to the fastening 22 of the central unit 15 of the fastening structure 106 as can also be seen in the view of figure 2A. The struts 20, 21 and consequently the interface 110 provided by the fastening 22 is supported by a support bracket 109 which is attached to the jig 108. The support bracket 109 includes a first portion 111 which guides the interface 110 along the X direction and locks the interface 110 into a fixed position by means of the locking mechanism. This mechanism for linear movement of the interface locking tools hinders collision between the lock bolt and the interface 110 during assembly, guides the movement of the lock bolt during assembly and enables a simple two-handed assembly.

A mechanism for the linear movement of the interface locking tools during installation is provided. The interfaces 110 are guided along the x-axis by the guide and locks into fixed positions by means of the locking mechanism. Thus, collision between the lock bolt 30 and the interface 110, in particular the interface cups, during installation and assembly is avoided.

Referring to Figs 3E, 4A and 4B, during installation, the interface110 is moved in the x direction shown together with the jig 108 and fastening structure 106. Tolerance compensation in the yz plane, for example for the lower and central interface 23, 25 of a section 10 of the fastening structure 106 takes place is followed. The interface 110 is held in an outer position of the tolerance window along the positive x-axis by the tolerance compensator 30. The interface 110 is centred in a neutral position along the Y axis and said axis by means of the guide 50. Due to the diameter of the lock bolt, i.e. the tolerance compensator 30, the tip 49 of the bolt meets the ball 47, that provides the locking member 47, in the bush 33 provided on the attachment frame 104. During X movement, that is movement of the jig 108 in the in the X direction, the chamfer of the lock bolt aligns the bolt with the bore 33. The linear guides 51, 52 prevent rotation of the bolt while enabling movement in the Y and Z directions. This urges the thus the rods 35, 36 which are retained on the seat 34 to be moved with the bolt 30. The length and angle of the rods 35, 36 adjust passively. The preload of the outer spring 44 is greater than the X force at the chamfer, i.e. tip 48, of the lock bolt.

Tolerance compensation the X direction and locking takes place as follows. As the interface 110 touches the bush 33, the outer spring 44 compresses and applies its preload to the interface 110. Afterwards, the inner pushpin 49 pushes locking pin 47 out which then pushes the locking means 47 outwards and locks the interface, whereby the preload of the inner spring 45 is greater than the locking force. If movement continues in the x direction, for example since another interface of the fastening means 106 has not yet locked, the inner spring 45 compresses together with the outer spring 44 until all of the interfaces are locked.

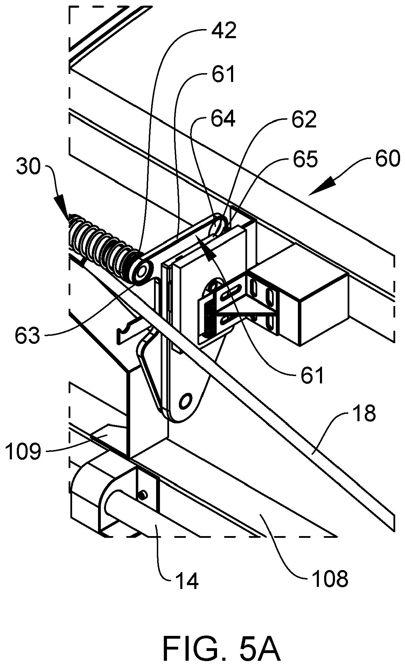

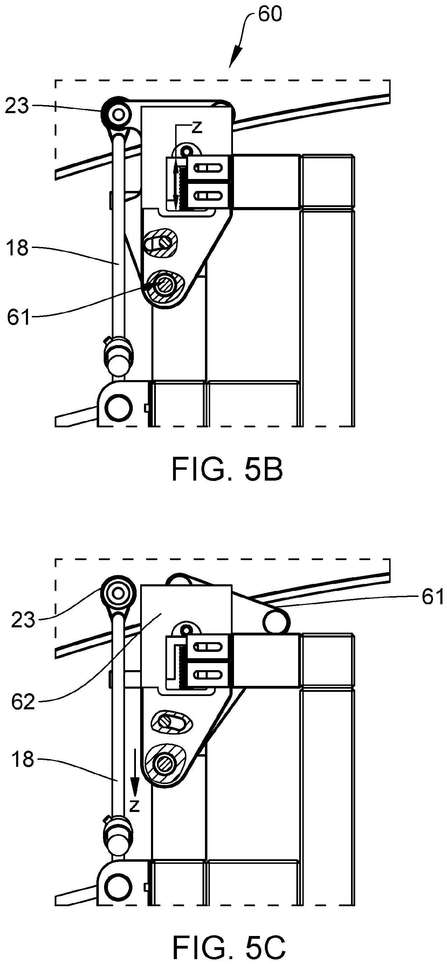

Figure 5, which includes figures 5A to 5C, illustrate views of a further guiding system 60 according to another embodiment. The guiding system 60 is positioned between the tolerance compensator 30 and the jig 108 and, in particular, between the end member 42 of the tolerance compensator 30 and the jig 108.

The guide system 60 includes an elongate member 61 which is attached to the end member 42 and to plate 62 of the guide system 60. The elongate member 61 includes an opening 63, 64 at each end which is attached to the cylindrical end member 43 and a pin 65 of the guiding system 60. The elongate member 61 can rotate about the longitudinal axis of the tolerance compensator 30 and the longitudinal axis of the pin 65 the guiding system 60 such that the position of the tolerance compensator 30 with respect to the jig 108 can move in the z direction and in the y direction, as shown by the arrows. This movement in the lateral y direction and in the z direction, that is in the height direction, providing tolerance compensation in two further linear directions in addition to the compensation in the x provided by the tolerance compensator 30.

After the fastening structure 106 has been connected to the attachment structure 102 of the vehicle, shown in figure 5C, the jig 108 can be removed by lowering the jig 108 as shown in figure 5C.

An interfacing assembly between a stiff jig 108 and the toleranced fuselage structure 102 is provided which has local three degrees of freedom tolerance compensation, e.g. for each interface 110 with the attachment structure 102, e.g. frame 104, of the vehicle. Sequential, manual adjustment and locking of each interface 110 is avoided thus reducing installation time, and improving accuracy and ergonomics.

The tolerance compensator 30 may be used in the installation of a positional tolerance compensated module, e.g. a crown module, using a jig 108. The module comprises a fastening structure 106 having a triangulated rod structure connected by rotary joints. The rods 35, 36 are connected to the frames 104 (spars) of the fuselage 103 by more than one, e.g. three mechanical interfaces 110 per frame 104. The module 106 may be installed in segments having a length of more than one frame 104, e.g. at least 6 frames 104 length so that at least 18 interfaces are coupled in one installation process. During installation, the tolerances of the fuselage 103 result in deviations of interface positions in each direction, that need to be compensated. The described system allows installation and tolerance compensation of all interfaces 110 in the same installation process.

It is possible to complete installation, locking, and tolerance compensation of the primary structure interfaces 110 by using passive mechanisms. To achieve this, the tolerance compensation mechanism provides 3 degrees of freedom to reach a defined nominal position for locking the structure 106 in position. During installation, a driven motion of the jig 108 supporting the fastening structure 106, e.g. crown module, in one directional axis is used, e.g. the x axis. The integrated spring-loaded locking tool in the form of the tolerance compensator 30 introduces a defined preload force on the locking pins 47 to ensure correct seating. The system can be adapted to different joining methods that utilize lateral movement for locking.

The integration of the tolerance compensator 30 and locking of a large number of structural interfaces 110 between two large systems (e.g. a crown module 106 and the fuselage 103) in one defined linear installation movement of a jig 108 or similar structure is provided. This enables a large number of manual installation steps (locking and adjustment of each interface) to be avoided, thereby reducing the lead time and productivity of the cabin installation. Additionally, it reduces processes with poor ergonomics from the process chain. Furthermore, the repeatability of the interface installation and adjustment is increased, thereby increasing overall accuracy of the installed system.

Multiple springs enable tolerance compensation in the x direction as well as locking. Guides and movable plates enable tolerance compensation in the y direction and x direction while preventing rotation of the interface 110. The tip 48 and preloaded alignment element, provided by the tolerance compensator 30, provide neutral position in the y direction and direction of the interface. The jig 108 can be removed from the fastening structure by first moving in the minus x direction, towards the rear of the aircraft, then in the minus z direction, that is downwardly, and then in the minus Y direction, that is laterally towards the centre of the fuselage 103.

When installing crown modules, e.g. the fastening structure 106 shown in Fig. 2, for substructure assembly in the fuselage 103, the pre-assembled crown modules are moved to the assembly position using mobile jigs 108. To reach the assembly position and to compensate for positional tolerances, compensating mechanisms are provided within the jigs 108. In order to keep the mass of the jig as low as possible, the necessary mechanics should be lightweight. With the aim of avoiding further axes of movement, a local mechanism that makes a degree of freedom at another point obsolete by automatically retracting the joining tools is provided.

A local degree of freedom on the joining tools enables for the overall mass of the jig to be reduced. In addition, no additional control component is needed for the passive mechanism, which has a positive effect on the complexity of the assembly process.

The following functions in a single assembly are provided: the combination of swivel joint and lateral guide allows freedom of movement to compensate for joining tolerances to a defined extent; the pre-tensioning of the arm allows a defined holding position to be implemented, which is maintained until the joining elements are inserted into the frame bushings and, as soon as the mechanics are retracted from the joining element, the apparatus moves out of the way so that the subsequent movement of the jig can be carried out without collision.

The integrative approach of combining the motion axes and motion sequences for different boundary conditions in a single mechanism provides a potential for reducing the mass of the jig. Both the shifting of the movement axis directly to the joining tool and the elimination of additional process complexity through active movement control are advantageous. The use of short levers, e.g. the elongate member 61, within the resulting kinematic chain also results in greater system stiffness with the same material cross-sections, e.g. for use in long jigs with tight positioning tolerances.

During installation, the process for tolerance compensation in the xy plane for the interfaces provided by the guide system 60, provides a rotational movement for the compensation in the y direction. The neutral position of the wire movement is provided by a spring plunger. During decoupling of the jig 108, the tools passively move have the way of the fixed crown module. The additional degree of freedom of movement and the y axis is provided by simple to extraction. The mass driven automatic struggle of the interface locking tool assembly after the bolts are locked to this bar and the tool assembly is retracted in the x direction. After extra traction, the jig 108 is free to move away in the z direction.

### List of reference signs:

- 10: section
- 11: first unit
- 12: second unit
- 13: connection unit
- 14: elongate body
- 15: component fixture
- 16: first strut
- 17: first fastening
- 18: second strut
- 19: second fastening
- 20: fifth strut
- 21: sixth strut
- 22: third fastening
- 23: second fitting
- 24: first fitting
- 25: third fitting
- 26: length compensator

- 30: tolerance compensator
- 31: outer tubular body
- 32: tip portion
- 33: bore
- 34: seat
- 35: rod
- 36: rod
- 37: opening
- 38: inner tubular body
- 39: inner pin
- 40: first end
- 41: second end
- 42: end member
- 43: radial flange
- 44: outer spring
- 45: inner spring
- 46: stop
- 47: locking member
- 48: tip
- 49: second end

- 50: guide
- 51: linear guide
- 52: linear guide

- 60: guide system
- 61: elongate member
- 62: plate
- 63: opening
- 64: opening
- 65: pin

- 100: aircraft
- 101: interior
- 102: attachment structure
- 103: fuselage
- 104: fuselage frame
- 105: stringer
- 106: fastening structure
- 107: module
- 108: jig
- 109: support bracket
- 110: interface
- 111: first portion

## Claims

1. Tolerance compensator (30) for installing a fastening structure (106) on an attachment structure (102) of a vehicle (100), wherein the tolerance compensator (30) comprises:
an outer tubular body (31) comprising a longitudinal axis and a tip portion (32) having a tip (48) at a first end, wherein the tip (48) is insertable in an opening (33) of a fitting (23) of the attachment structure (102), wherein the outer tubular body (31) retains an interface (110) of the fastening structure (106) that is to be connected to the attachment frame (102);
an inner tubular body (38) comprising an inner pin (39) at a first end, wherein the inner tubular body (38) and the inner pin (39) are movable along the longitudinal axis within the outer tubular body (31) and tip portion (32), respectively;
an end member (42) that abuts a second end of the inner tubular body (38) that opposes the first end and that has a radial flange (43) that abuts the outer tubular body (31);
an inner spring (45) located on the inner pin (39) within the inner tubular body (38), wherein the inner spring (45) is retained between the end member (42) and the first end of the inner tubular body (31);
an outer spring (44) retained on the outer tubular body (31) and between the radial flange (43) of the end member (42) and a stop (46) located on an outer surface of the outer tubular body (31).

2. Tolerance compensator (30) according to claim 1, wherein the tip portion (32) comprises a seat (34) for retaining the interface (110) of the fastening structure (106).

3. Tolerance compensator (30) according to claim 2, wherein the seat (34) has a concave shape and the interface (110) comprises a cup shape.

4. Tolerance compensator (30) according to any one of claims 1 to 3, further comprising a locking member (47) that is moveably retained within the wall of the tip portion (32), wherein movement of the inner pin (39) along the longitudinal axis urges the locking member (47) radially outwards.

5. Tolerance compensator (30) according to any one of claims 1 to 4, wherein the outer tubular body (31) comprises a nose portion that forms a flange on the inner surface of the outer tubular body (31) that acts as a stop for movement of the inner tubular body (38) along the longitudinal axis.

6. Tolerance compensator (30) according to any one of claims 1 to 5, wherein movement of the end member (42) along the longitudinal axis within the outer tubular body (31) urges the inner tubular body (38) along the longitudinal axis and compresses the outer spring (44) and inner spring (45).

7. Installation system for installing a fastening structure (106) comprising a plurality of interfaces (110) on an attachment structure (102) of a vehicle (100), the installation system comprising:
a jig (108) for supporting the fastening structure (106),
the tolerance compensator (30) according to any one of claims 1 to 6 for at least one interface (110) of the fastening structure (106), wherein the jig (108) is moveable in a perpendicular direction to attachment structure (102) in order to install the interface (110) of the fastening structure (106) on the attachment structure (102) of the vehicle.

8. Installation system according to claim 7, wherein each of the interfaces (110) of the fastening structure (106) has a tolerance compensator (30) according to any one of claims 1 to 7 and tolerance compensation for the plurality of interfaces (110) is provided in one linear movement of the jig (108).

9. Installation system according to claim 7 or claim 8, wherein the interface (110) of the fastening structure (106) engages the seat (34) of the outer tubular body (31) and which comprises an opening (37) adapted to receive the tip portion (32).

10. Installation system according to any one of clams 7 to 9, wherein the interface (110) is connected to a rod (35, 36) which is adapted to receive a strut (16, 18) of the fastening structure (106).

11. Installation system according to any one of claims 7 to 10, wherein the seat (34) comprises a concave surface and the interface (110) of the fastening structure (106) comprises a cup-shaped distal portion.

12. Installation system according to any one of clams 8 to 11, wherein a first interface (110) and a second interface (110) are retained on the seat (34), wherein the seat (34) comprises a concave shape, the first interface (110) comprises a cup shape and is adapted to fit the seat (34) and the second interface (110) comprises a cup shape that is adapted to fit the cup chape of the first interface (110).

13. Installation system according to any one of clams 8 to 12, further comprising a guide system (50; 60) that is mounted on the jig, wherein the guide system (50) comprises at least one guide plate, one guide plate allowing movement in two directions that are perpendicular to the longitudinal axis of the outer tubular body (31), wherein the guide system (50; 60) is connected to the end member (42) of the tolerance compensator (30).

14. Installation system, according to claim 13, wherein the guide plate (61) is elongate and has a first end that is rotationally retained on the end member (42) of the tolerance compensator (30) and a second end that is rotationally retained on guide system (60) to provide tolerance compensation in the two directions that are perpendicular to the longitudinal axis of the outer tubular body (31).

15. Installation system according to any one of claims 8 to 14, wherein the fastening structure (3) comprises a plurality of sections, wherein each section comprises a first unit (11), a second unit (12) and a connection unit (13) positioned vertically between the first and second units (11, 12),
wherein the first unit (11) comprises an elongate body (14), a first strut (16) and a second strut (18), wherein the first strut (16) is detachably coupled to the elongate body (14) and to a first interface (17) and the second strut (18) is detachably coupled to the elongate body (14) and to the first interface (17) and extends at an inclined angle with respect to the elongate body (14),
wherein the second unit (12) comprises an elongate body, a first strut (16) and a second strut (18), wherein the first strut (16) which is detachably coupled to the elongate body (14) and to a second interface (19) and the second strut (18) is detachably coupled to the elongate body (14) and the second interface (19) and extends at an inclined angle with respect to the elongate body (14),
wherein the connection unit (13) includes fifth and sixth struts (20, 21) and a third interface (22), wherein the fifth strut (20) extends is detachably coupled to the elongate body (14) of the first unit (11) and to the third interface (22) and the sixth strut (21) is detachably coupled between the elongate body (14) of the second unit (12) and the third interface (22).
